# EUROPEAN PATENT SPECIFICATION

(11) **EP 3 882 009 B1**
(45) Date of publication and mention of the grant of the patent: **30.10.2024**
(21) Application number: 19883346.9
(22) Date of filing: 04.03.2019
(51) Int. Cl.: B29D 30/06, B29C 35/00, B29C 33/20

(54) **PULL ROD TYPE VULCANIZING MACHINE**
ZUGSTANGEN-VULKANISIERMASCHINE
MACHINE DE VULCANISATION DE TYPE À TIGE DE TRACTION

(30) Priority: 16.11.2018 CN 201811364760
(43) Date of publication of application: 22.09.2021
(73) Proprietor: ARP TECHNOLOGIES (SUZHOU) CO., LTD., Suzhou, Jiangsu 215000 (CN)
(72) Inventor: ZHANG, Zhengluo, Suzhou, Jiangsu 215000 (CN)
(74) Representative: Gill Jennings & Every LLP
(86) International application number: PCT/CN2019/076795
(87) International publication number: WO 2020/098178

(56) References cited:
- CN-A- 102 490 295
- CN-A- 102 490 295
- CN-A- 109 291 479
- CN-A- 109 291 480
- CN-U- 209 079 274
- CN-U- 209 096 069
- US-A1- 2005 281 908
- US-A1- 2016 354 952
- No further relevant documents disclosed

## Description

### TECHNICAL FIELD

The present application relates to the technical field of tire manufacturing equipment, for example, a pull rod type vulcanizing machine.

### BACKGROUND

A tire vulcanizing machine is one of the most important devices among tire manufacturing equipment. The function of the tire vulcanizing machine is to vulcanize a tire parison formed in the previous process into an elastic and plastic finished tire with full abrasion resistance through processes such as tire loading, building-curing, heating, pressurizing, tire unloading, and inflation cooling. In the related art, vulcanizing machines may be divided into a mechanical type vulcanizing machine and a hydraulic type vulcanizing machine. With the development of science and technology, the market share of the hydraulic type vulcanizing machine continues to expand due to the high precision of the hydraulic type vulcanizing machine. The main models of hydraulic type vulcanizing machines at home and abroad are a frame type, a clamping plate type, a balance type, a lock ring type, and a pull-rod mold clamping type. The hydraulic type vulcanizing machine is a new type of vulcanizing machine. The advantages of the hydraulic type vulcanizing machine are that the lower mold is fixed, the precision is high, pull rods are uniformly distributed around the tire mold, the mold clamping force is uniform, the pressurized oil cylinder is below the host, the open design is conducive to the maintenance and changing specifications, and in the event of an oil spill, equipment and tires are not contaminated. Therefore, the hydraulic type vulcanizing machine has a broad market prospect.

In the pull-rod mold clamping type vulcanizing machine in the related art, the cross beam is supported by the guide column and the manipulator is mounted on the stand column so that the structure is relatively complicated. Moreover, four pull rods are provided for mold clamping in four directions of the cross beam and the base so that the overall occupied space is great and the cost is high.

CN102490295A discloses a translation type hydraulic tire setting vulcanizer, which comprises a vulcanizing device, a tire loading mechanism and a rear air charging device, wherein the vulcanizing device comprises an upper main board and a lower main board, the lower main board moves forwards and backwards along a horizontal guide rail of a base, and the upper main board is installed on front and rear guiding upright posts at both sides of the lower main board by a vertical guide rail; the tire loading mechanism is installed on the front guiding upright post; and the rear air charging device comprises an air charging mechanism, a tire unloading charging mechanism, and a charging tire unloading mechanism, the charging mechanism is installed on the rear guiding upright post, the tire unloading charging mechanism is arranged behind the lower main board and is connected with a dragging mechanism, and the charging tire unloading mechanism is arranged among the charging mechanism, tire unloading charging mechanism and a conveyer belt.

US2005281908A1 discloses a new clamping machine, which can perform a straight-hydraulic mold clamping and a tie-bar drawing-out operation in a reduced working space, and enables a shortened mold exchanging time, by effecting retraction of a movable die plate and a tie-bar drawing-out operation simultaneously. In order to draw out tie bars 18 from a fixed die plate 10 only when molds are exchanged, annular pistons 36, which construct mold clamping cylinders in the fixed die plate, are provided. Abutting each piston, a pair of half nuts 48A, 48B are arranged and driven to engage with an engagement portion 18Aprovided at one end of each tie bar on the side of the fixed die plate, usually, other than during the drawing out operation. A relative position of each tie bar to the half nuts is set to be able to engage with the half nuts when a right end face of the tie bar contacts with the stopper plate 46. When pressure for clamping molds is increased during such engagement, the annular pistons are driven to transmit a force, for performing an initial operation, to the tie bars.

### SUMMARY

The present application provides a pull rod type vulcanizing machine. The pull rod type vulcanizing machine has a simple structure, which is conducive to saving cost and reducing the occupied space.

The present invention application is set out in the appended set of claims.

The pull rod type vulcanizing machine includes a first stand column, a second stand column, a base, a cross beam, and at least one manipulator. The first stand column and the second stand column are arranged at an interval. A first end of the base is connected to the first stand column, and a second end of the base is connected to the second stand column. The cross beam is located above the base, a first end of the cross beam is slidably connected to the first stand column, and a second end of the cross beam is slidably connected to the second stand column. The at least one manipulator is connected to at least one of the first stand column and the second stand column and is vertically slidable along the at least one of the first stand column and the second stand column. The at least one manipulator and the cross beam are arranged in at least one of the following two forms: the at least one manipulator and the cross beam are connected to different sides of the first stand column, respectively; and the at least one manipulator and the cross beam are connected to different sides of the second stand column, respectively.

### BRIEF DESCRIPTION OF DRAWINGS

FIG. 1 is a three-dimensional structural schematic view of a pull rod type vulcanizing machine provided by embodiment one according to the present application;
FIG. 2 is a front view of the pull rod type vulcanizing machine in FIG. 1;
FIG. 3 is a top view of the pull rod type vulcanizing machine in FIG. 1;
FIG. 4 is a sectional view taken along the line A-A of FIG. 3;
FIG. 5 is a structural schematic view of a mold clamping device in FIG. 3 in a closed state;
FIG. 6 is a structural schematic view of the mold clamping device in FIG. 3 in an open state;
FIG. 7 is a top view of the mold clamping device in FIG. 5;
FIG. 8 is a sectional view of the mold clamping device in FIG. 7 taken along the B-B line;
FIG. 9 is an assembly structural schematic view of a stand column and a manipulator in FIG. 1; and
FIG. 10 is a three-dimensional structural schematic view of a pull rod type vulcanizing machine provided by embodiment two according to the present application.

### Reference list

- 101: first stand column
- 102: second stand column
- 11: first sliding side surface
- 12: second sliding side surface
- 13: third sliding side surface
- 2: base
- 21: base connecting ear
- 3: cross beam
- 31: cross beam connecting ear
- 4: open-and-close mold oil cylinder
- 41: fixing frame
- 5: pull rod assembly
- 51: pull rod
- 511: locking tooth
- 52: pressurized oil cylinder
- 53: mold clamping device
- 531: stud
- 5311: stud hole
- 532: nut
- 5321: limiting ring
- 5322: first connector
- 5323: second connector
- 533: transmission sprocket
- 534: sliding bottom plate
- 535: slide rail
- 536: clamping plate
- 5361: locking groove
- 537: air cylinder
- 538: air cylinder mounting plate
- 539: linkage rod
- 6: manipulator
- 61: grabbing part
- 62: mechanical arm
- 63: mounting groove
- 64: hinge shaft
- 65: accommodation space
- 66: reinforcing plate

### DETAILED DESCRIPTION

### Embodiment one

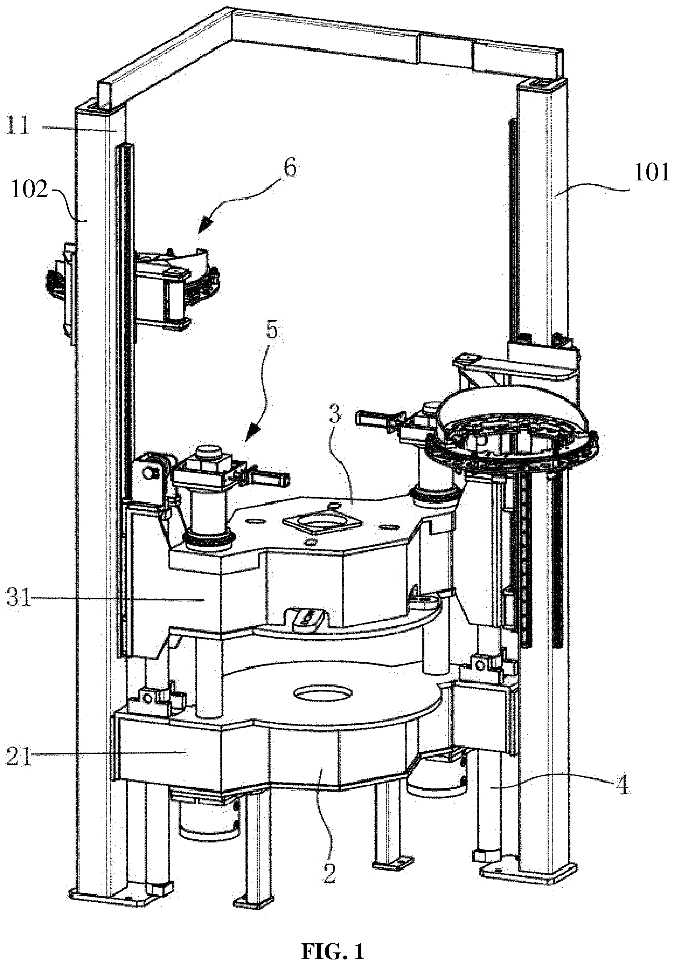

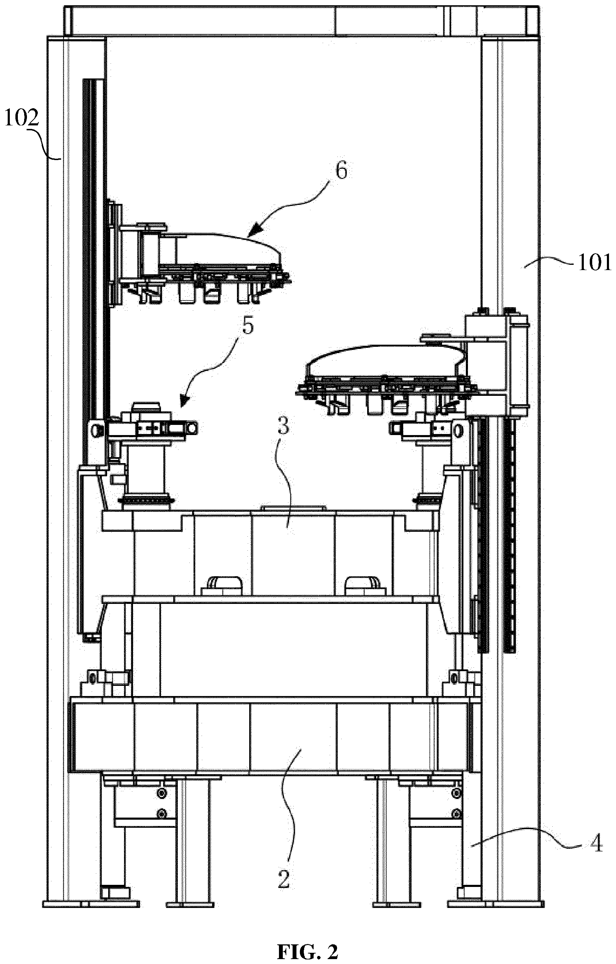

Referring to FIGS. 1 to 3, this embodiment provides a pull rod type vulcanizing machine. The pull rod type vulcanizing machine includes two stand columns, a base 2, a cross beam 3, an open-and-close mold oil cylinder 4, a pull rod assembly 5, and a manipulator 6.

The two stand columns are a first stand column 101 and a second stand column 102, respectively, and the first stand column 101 and the second stand column 102 are arranged at an interval and serve as supports. Each stand column is provided with at least two sliding side surfaces. In this embodiment, the first stand column 101 and the second stand column 102 both have a square cross-section with 4 side surfaces, and each side surface may serve as a sliding side surface. The side surfaces of the first stand column 101 may be defined as a first sliding side surface 11, a second sliding side surface 12, a third sliding side surface 13, and so on, and the side surfaces of the second stand column 102 may be defined as a first sliding side surface 11, a second sliding side surface 12, a third sliding side surface 13, and so on.

A first end of the base 2 is connected to the first stand column 101, and a second end of the base 2 is connected to the second stand column 102. In an embodiment, to reduce the strength requirement on the base 2, base connecting ears 21 are provided at two ends of the base 2, and the base 2 is connected to each stand column through a respective base connecting ear 21. In this case, the base 2 may be a hollow structure so that the mass of the structure is relatively small, which is conducive to reducing the cost.

The cross beam 3 is located above the base 2. A first end of the cross beam 3 is slidably connected to the first stand column 101, and a second end of the cross beam 3 is slidably connected to the second stand column 102 so that the cross beam 3 can move up and down to approach the base 2 to close the mold or to move away from the base 2 to open the mold. In an embodiment, to reduce the strength requirement on the cross beam 3, cross beam connecting ears 31 are provided at two ends of the cross beam 3, respectively, and the cross beam 3 is slidably connected to each stand column through a respective cross beam connecting ear 31. In this case, the cross beam 3 may be a hollow structure so that the mass of the structure is relatively less, which is conducive to reducing the cost. One of the first sliding side surface 11 of the first stand column 101 and a respective cross beam connecting ear 31 is provided with a vertical first stand column slide rail, another of the first sliding side surface 11 of the first stand column 101 and the respective cross beam connecting ear 31 is provided with a vertical first stand column slide groove, and the first stand column slide rail is clamped in and slidably fitted with the first stand column slide groove. One of the first sliding side surface 11 of the second stand column 102 and a respective cross beam connecting ear 31 is provided with a vertical first stand column slide rail, another of the first sliding side surface 11 of the second stand column 102 and the respective cross beam connecting ear 31 is provided with a vertical first stand column slide groove, and the first stand column slide rail is clamped in and slidably fitted with the first stand column slide groove.

Two open-and-close mold oil cylinders 4 are provided. The two open-and-close mold oil cylinders 4 are a first open-and-close mold oil cylinder and a second open-and-close mold oil cylinder, respectively. A cylinder rod of the first open-and-close mold oil cylinder is connected to the first end of the cross beam 3, and a cylinder rod of the second open-and-close mold oil cylinder is connected to the second end of the cross beam 3 so that the first open-and-close mold oil cylinder and the second open-and-close mold oil cylinder can drive the cross beam 3 to vertically slide along the stand column. The first open-and-close mold oil cylinder and the second open-and-close mold oil cylinder are symmetrically disposed on two sides of the cross beam 3 with respective to center points of the cross beam 3 and the base 1 so that a stable force can be ensured in the case where the mold is opened or closed. The center points are a projection point of a center of the tire on a horizontal plane in the case where the mold is closed.

In this embodiment, the cylinder rod of the first open-and-close mold oil cylinder and the cylinder rod of the second open-and-close mold oil cylinder are both connected to the cross beam connecting ears 31 instead of the cross beam 3. Therefore, when the open-and-close mold oil cylinders 4 drive the cross beam 3 to vertically move along the stand columns, the main force bearing point is on the cross beam connecting ears 31 and not directly applied to the cross beam 3.

In this embodiment, a cylinder body of each open-and-close mold oil cylinder 4 is connected to the base 2, and a cylinder rod of each open-and-close mold oil cylinder 4 is hinged to a respective cross beam connecting ear 31 of the cross beam 3. In the case where the mold is opened, the cylinder rod of each open-and-close mold oil cylinder 4 is lifted up and thus pushes the cross beam 3 to move upward; in the case where the mold is closed, the cylinder rod of each open-and-close mold oil cylinder 4 is retracted downward and thus drives the cross beam 3 to move downward.

Two pull rod assemblies 5 are provided. Each of the two pull rod assemblies 5 is disposed at a respective one of the two ends of the cross beam 3. The pull rod assemblies 5 are connected between the base 2 and the cross beam 3 and can lock the cross beam 3 in the case where the cross beam 3 and the base 2 are mold-closed. In an embodiment, each of the two pull rod assemblies 5 is connected to a respective cross beam connecting ear 31 and a respective base connecting ear 21. Four pull rod assemblies are reduced to two pull rod assemblies so that the structure is simplified, the size of the cross beam in a circumferential direction is reduced, and then the occupied space is reduced.

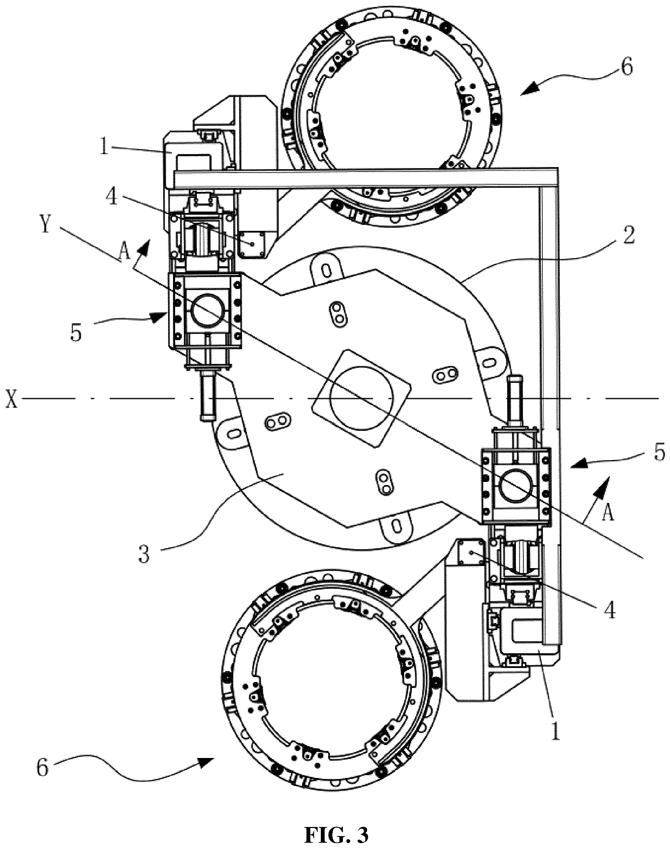

In an embodiment, referring to FIG. 3, in the pull rod type vulcanizing machine of this embodiment, based on the preceding structure, the first stand column 101 and the second stand column 102 are symmetrically disposed on two sides of the cross beam 3 with respect to the center points of the cross beam 3 and the base 2, and a connection line between the two stand columns 1 is not collinear with and is at a non-zero angle with a horizontal line where the center points of the cross beam 3 or the base 2 are located. Intuitively, the first stand column 101 and the second stand column 102 are arranged front and back separately or left and right separately, the first stand column 101 is located on a first side of the cross beam 3 and the base 2, and the second stand column 102 is located on a second side of the cross beam 3 and the base 2. In an embodiment, a line connecting center points of the first stand column 101 and the second stand column 102 is at a preset angle with a horizontal line passing through the center point of the cross beam 3 or the center point of the base 2. In an embodiment, the line connecting the center points of the first stand column 101 and the second stand column 102 is set as a Y line, the horizontal line passing through the center point of the cross beam 3 or the center point of the base 2 is set as an X line, the Y line passes through the center point of the cross beam 3 or the center point of the base 2, and the Y line is at a preset angle with the X line. The preset angle is not less than 30° and not greater than 60°. In an embodiment, the angle is 35°. In a limited space, the size of the processed part of the tire is greatly increased and the overall size of the outer shape is reduced.

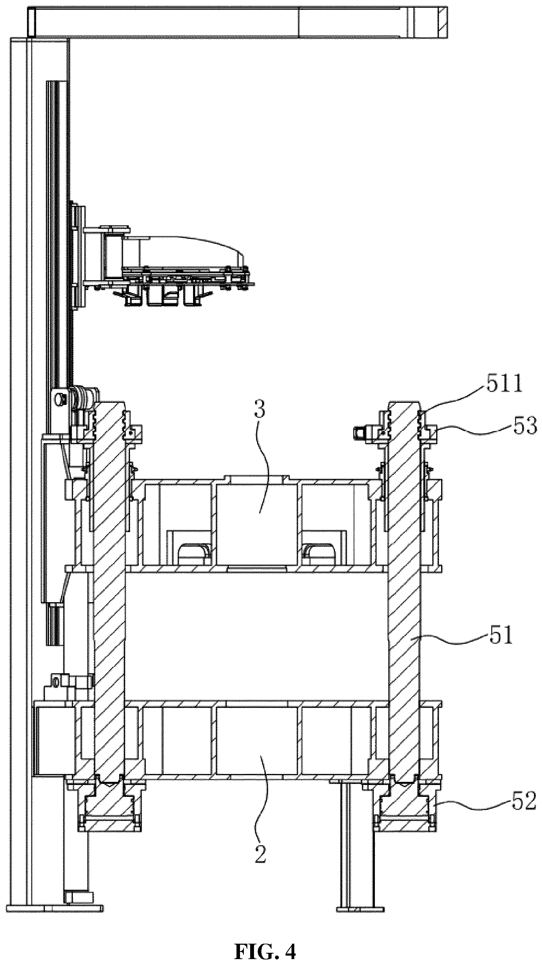

Referring to FIG. 4, each pull rod assembly 5 includes a pressurized oil cylinder 52 connected to the base 2, a pull rod 51 connected to a cylinder rod of the pressurized oil cylinder 52, and a mold clamping device 53 connected to the cross beam 3. The pressurized oil cylinder 52 is located at the bottom of the base 2, the mold clamping device 53 is located at the top of the cross beam 3, a first end of the pull rod 51 passes through the base 2 and is fixedly connected to the pressurizing oil cylinder 52, a second end of the pull rod 51 is suspended, and this suspended end can pass through the mold clamping device 53 and be locked with and in cooperation with the mold clamping device 53 in the case where the cross beam 3 and the base 2 are mold-closed.

Referring to FIG. 4, the pressurizing oil cylinder 52 is located at the bottom of a respective base connecting ear 21, the base connecting ear 21 is provided with a first pull rod hole through which the pull rod 51 passes, and the suspended end of the pull rod 51 is freely disposed after passing through the first pull rod hole.

Referring to FIG. 4, the mold clamping device 53 is located on the top of a respective cross beam connecting ear 31, the cross beam connecting ear 31 is provided with a second pull rod hole through which the pull rod 51 passes. In the case where the mold is closed, the suspended end of the pull rod 51 enters the mold clamping device 53 through the second pull rod hole.

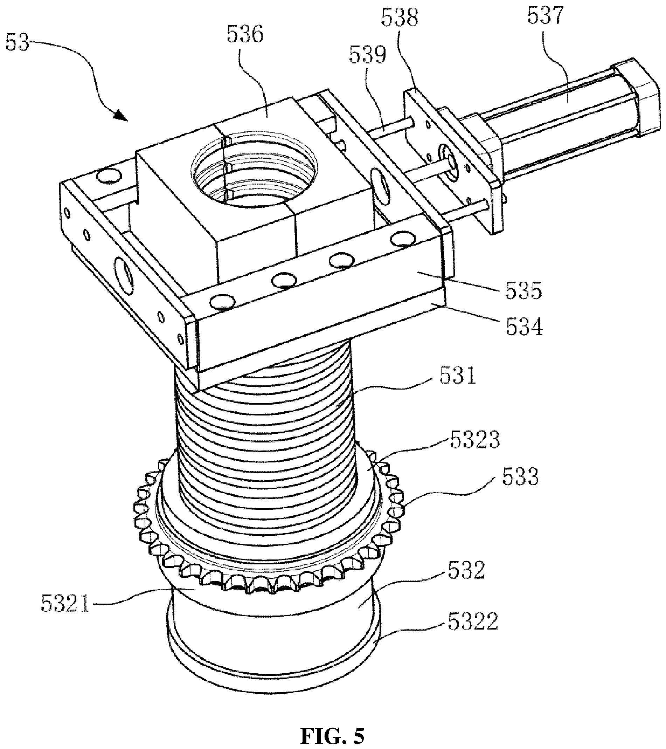

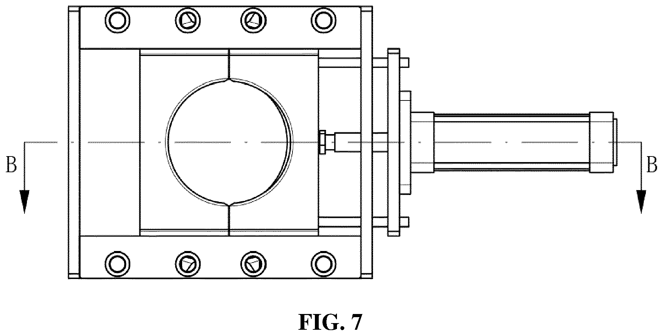

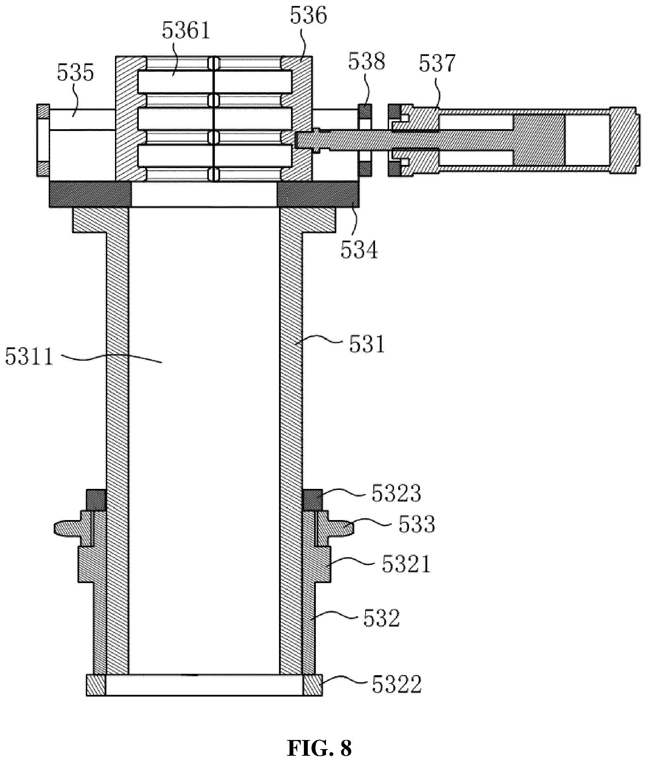

Referring to FIGS. 5 to 8, the mold clamping device 53 includes a mold clamping part capable of being locked with and in cooperation with the pull rod 51, the mold clamping part is provided with a mold clamping hole, and the pull rod 51 can pass through the mold clamping hole and be locked with the mold clamping hole. In an embodiment, one of the mold clamping hole and the pull rod 51 is provided with locking grooves 5361, and another of the mold clamping hole and the pull rod 51 is provided with locking teeth 511. After the pull rod 51 passes through the mold clamping hole, the locking teeth 511 are clamped in the locking grooves 5361. In this manner, the axial limit of the pull rod 51 is achieved, and thus the locking is achieved. One locking groove 5361 corresponds to one locking tooth 511, multiple locking grooves 5361 and multiple locking teeth 511 are provided, and the multiple locking grooves 5361 and the multiple locking teeth 511 both are arranged sequentially along an axial direction of the pull rod 51.

The preceding mold clamping part includes at least two clamping plates 536, the at least two clamping plates 536 are arranged in a ring shape and can be joined together to form the mold clamping hole, and the at least two clamping plates 536 is movable along a radial direction of the mold clamping hole. In this embodiment, two clamping plates 536 are provided, and the side faces of the two clamping plates 536 facing to each other are symmetrically provided with semicircular grooves, respectively. In the case where the two clamping plates 536 are joined together, two semicircular grooves are joined into the preceding mold clamping hole. Inner sides of the two semicircular grooves may be provided with the locking teeth 511 or provided with locking grooves 5361. In this embodiment, the inner sides of the two semicircular grooves are provided with the locking grooves 5361, the locking grooves 5361 of the two semicircular grooves are correspondingly arranged and can be joined into a circle, and correspondingly, the locking teeth 511 are provided on an outer periphery of the suspended end of the pull rod 51.

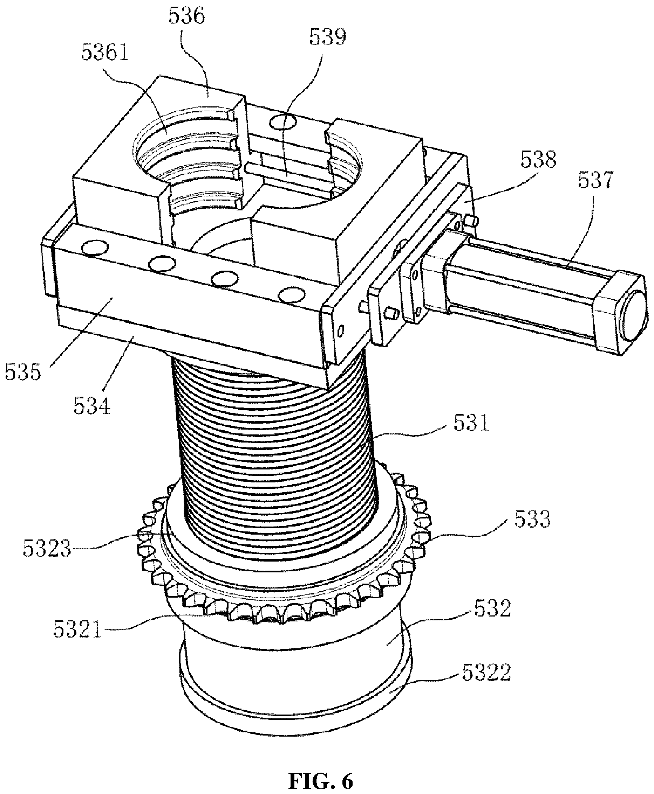

Referring to FIGS. 5 and 6, the clamping plates 536 are disposed on one sliding bottom plate 534, and the sliding bottom plate 534 is provided with a bottom plate hole through which the pull rod 51 passes. Two slide rails 535 are further provided on the sliding bottom plate 534. The two slide rails 535 are fixedly connected to the sliding bottom plate 534. The two slide rails 535 are located on two sides of the two clamping plates 536, respectively, and each of the two slide rails 535 can be fitted with side parts of the two clamping plates 536 simultaneously to play a guiding role so that the smooth movement of the two clamping plates 536 can be ensured.

In an embodiment, a flange is provided on each of the side parts of the clamping plates 536, a slide groove is provided on one side of each of the slide rails 535 facing the clamping plates 536, and the flange is clamped in and slidably fit with the slide groove. The sliding direction of the flange and the slide groove is the movement direction of the opening and closing of the two clamping plates 536.

One of the clamping plates 536 is connected to an air cylinder 537. In the case where the air cylinder 537 drives one of the clamping plates 536 to move, another of the clamping plates 536 can be driven to move inward together to hold tight the pull rod 51 or move outward to loosen the pull rod 51.

Slide rail limit plates are mounted at two ends of the two slide rails 535, respectively, so as to limit the clamping plates 536. Moreover, to strengthen the installation of the air cylinder 537, a air cylinder mounting plate 538 is provided on the mold clamping part, a cylinder body of the air cylinder 537 is mounted on the air cylinder mounting plate 538, an air cylinder rod of the air cylinder 537 passes through the air cylinder mounting plate 538 and one slide rail limit plate and then is connected to the clamping plate 536, the air cylinder rod of the air cylinder 537 is connected to the middle of the clamping plate 536, and the connection point is located in the middle of the two slide rails 535 so that when the air cylinder rod pushes the clamping plate 536, stable forces on two sides of the clamping plate 536 can be ensured and the clamping force is consistent.

To achieve the synchronous outward or inward movement of the two clamping plates 536, the two clamping plates 536 are connected by two linkage rods 539, a first end of the linkage rod 539 passes through and is fixed to a joint surface of one clamping plate 536, and a second end of the linkage rod 539 passes through the other clamping plate 536 and is connected to the air cylinder mounting plate 538 through the slide rail limit plate.

In the case where the pull rod 51 needs to be held tight, the air cylinder 537 operates and the air cylinder rod of the air cylinder 537 pushes the clamping plate 536 connected to the air cylinder rod of the air cylinder 537 to move inward. Due to the linkage of the linkage rods 539, the other clamping plate 536 is also driven to move inward until the two clamping plates 536 are joined together. In this process, the two clamping plates 536 may move synchronously or move sequentially, both of which can achieve the preceding purposes of holding tight and loosening.

Referring to FIGS. 5 to 8, the mold clamping device 53 further includes an adjustment part. The adjustment part is connected between the mold clamping part and the cross beam 3, and the adjustment part can adjust the mold clamping distance between the cross beam 3 and the base 2 by adjusting the distance between the cross beam 3 and the mold clamping part so that the pull rod type vulcanizing machine is applied to tires of various specifications.

The adjustment part includes a stud 531, a first end of the stud 531 is connected to the bottom of the sliding bottom plate 534 of the mold clamping part, and a second end of the stud 531 is connected to the cross beam 3. The stud 531 is provided with a stud hole 5311. In the case where the mold is closed, the pull rod 51 can pass through the cross beam connecting ear and directly reach the mold clamping hole of the mold clamping part through the stud hole 5311. Therefore, the stud hole 5311, the bottom plate hole, and the mold clamping hole are coaxially arranged and in communication with each other.

A nut 532 is sleeved on the stud 531, and the nut 532 is connected to the cross beam 3. In the case where tires of different specifications are manufactured, the mold clamping distance between the cross beam 3 and the base 2 needs to be adjusted. In this case, the nut 532 can be rotated in advance so that the position of the nut 532 on the stud 531 is changed, the distance between the cross beam 3 and the mold clamping part is adjusted, and thus the adjustment of the distance between the cross beam 3 and the base 2 can be achieved.

In an embodiment, a first end of the nut 532 is provided with a first connector 5322, the first end of the nut 532 is connected to the cross beam 3 through the first connector 5322, and a second end of the nut 532 is provided with a second connector 5323. The nut 532 is provided with a limiting ring 5321, and a rotation driving structure is provided between the second connector 5323 and the limiting ring 5321 so that the adjustment of the nut 532 is achieved. The rotation driving structure may be a pulley rotation structure, a sprocket transmission structure, or a gear transmission structure. In this embodiment, the rotation driving structure is a sprocket transmission structure, the sprocket transmission structure includes a transmission sprocket 533 sleeved on the nut 532, and the transmission sprocket 533 is located between the second connector 5323 and the limiting ring 5321. The rotation driving structure further includes another drive sprocket. The transmission sprocket 533 and the drive sprocket are drivingly connected through a transmission chain, and the drive sprocket is connected to a driving device. In the case where adjustment is needed, the driving device drives the drive sprocket, the transmission sprocket 533 is driven to rotate through the transmission chain, and the transmission sprocket 533 drives the nut 532 to rotate and move on the stud 531.

Through the preceding adjustment part, the fitting position of the mold clamping part and the pull rod 51 is consistent, and it is no longer necessary to provide more clamping structures on the pull rod for the height adjustment, thereby ensuring the strength of the pull rod.

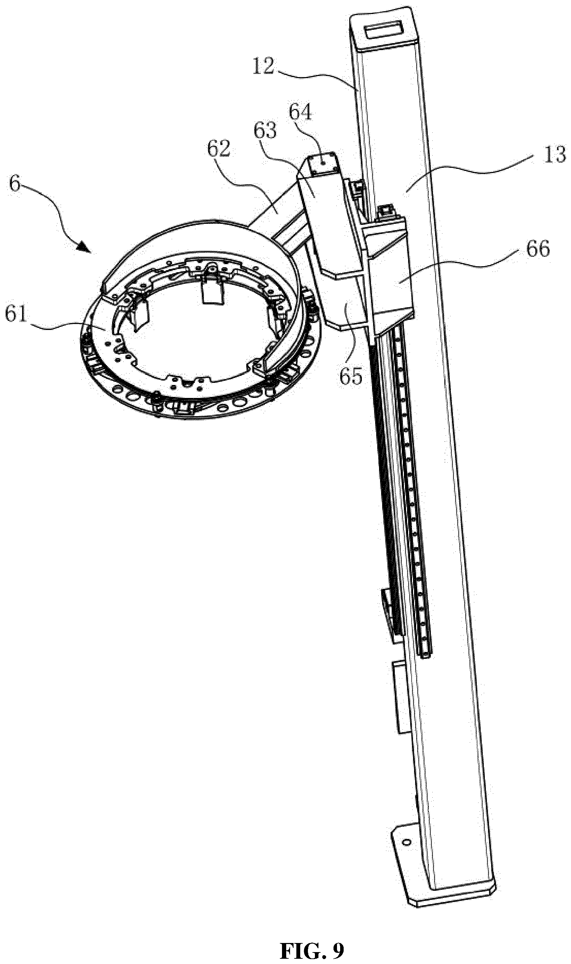

Referring to FIG. 9, the manipulator 6 is connected to the stand column, and the manipulator 6 is vertically slidable along the stand column. The manipulator 6 includes a grabbing part 61 configured to clamp the tire. The grabbing part 61 is connected to a mechanical arm 62. The mechanical arm 62 is connected to a horizontally arranged mounting groove 63. The mounting groove 63 is formed with a horizontal accommodation space 65. The mechanical arm 62 is hinged in the mounting groove 63 through a hinge shaft 64. Therefore, the mechanical arm 62 can be accommodated in the accommodation space 65 so that the storage is achieved. One of the mounting groove 63 and the second sliding side surface 12 is provided with a second stand column slide groove, another of the mounting groove 63 and the second sliding side surface 12 is provided with a second stand column slide rail, and the second stand column slide rail is slidably fitted with the second stand column slide groove.

Through the preceding connection, the manipulator 6 is located on the side part of the cross beam 3. The manipulator 6 needs to swing around the hinge shaft 64 when picking and placing the tire. To ensure the stable connection, the mounting groove 63 is connected to a reinforcing plate 66, one of the reinforcing plate 66 and the third sliding side surface 13 is provided with a third stand column slide groove, another of the reinforcing plate 66 and the third sliding side surface 13 is provided with a third stand column slide rail, and the third stand column slide rail is slidably fitted with the third stand column slide groove.

In this embodiment, the manipulator 6 and the cross beam 3 are connected to different sliding side surfaces of the stand column, respectively, so that the shape of the stand column is cleverly utilized. In the case where the stand column is shared, a partitioned layout is formed. This layout structure makes the structure of the manipulator 6 and the cross beam 3 compact, and the occupied space can be greatly reduced. In an embodiment, at least one manipulator 6 is provided, and the at least one manipulator 6 and the cross beam 3 are arranged in at least one of the following forms: the at least one manipulator 6 and the cross beam 3 are connected to different sides of the first stand column 101, respectively; and the at least one manipulator 6 and the cross beam 3 are connected to different sides of the second stand column 102, respectively.

### Embodiment two

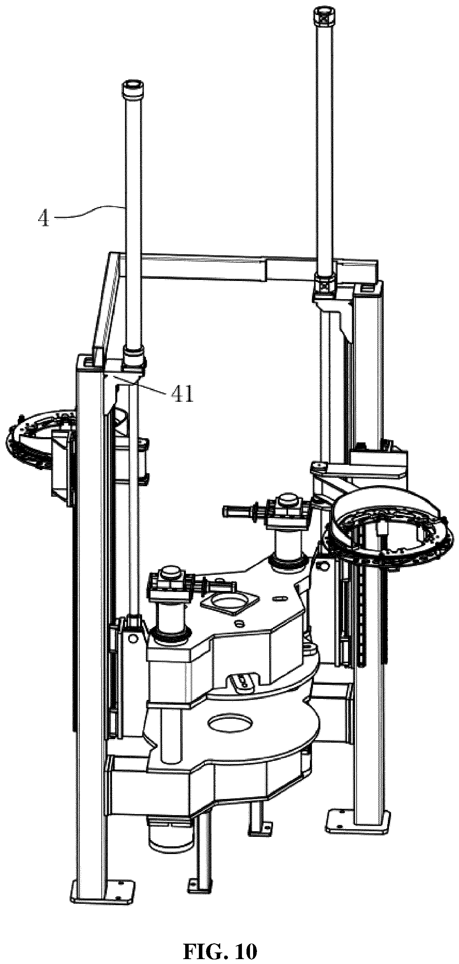

Referring to FIG. 10, the difference between this embodiment and embodiment one is that the cylinder body of the open-and-close mold oil cylinder 4 is connected to the stand column through a fixing frame 41, and the cylinder rod of the open-and-close mold oil cylinder 4 is hinged to the cross beam 3.

## Claims

1. A pull rod type vulcanizing machine, comprising:
a first stand column (101) and a second stand column (102), wherein the first stand column (101) and the second stand column (102) are arranged at an interval;
a base (2), wherein a first end of the base (2) is connected to the first stand column (101), and a second end of the base (2) is connected to the second stand column (102), and the first end and the second end of the base (2) are respectively provided with a base connecting ear (21);
a cross beam (3) located above the base (2), wherein two cross beam connecting ears (31) are provided at the first end and the second end of the cross beam (3), respectively, the first end of the cross beam (3) is slidably connected to the first stand column (101) by one of the two cross beam connecting ears (31), and a second end of the cross beam (3) is slidably connected to the second stand column (102) by another of the two cross beam connecting ears (31);
at least one manipulator (6), wherein the at least one manipulator (6) is connected to at least one of the first stand column (101) and the second stand column (102), and vertically slidable along the at least one of the first stand column (101) and the second stand column (102),
wherein the at least one manipulator (6) and the cross beam (3) are arranged in at least one of the following two forms:
the at least one manipulator (6) and the cross beam (3) are connected to different sides of the first stand column (101), respectively; and
the at least one manipulator (6) and the cross beam (3) are connected to different sides of the second stand column (102), respectively;
two open-and-close mold oil cylinder (4) comprising a first open-and-close mold oil cylinder (4) and a second open-and-close mold oil cylinder (4), a cylinder rod of the first open-and-close mold oil cylinder (4) is connected to the first end of the cross beam connecting ear (31), and a cylinder rod of the second open-and-close mold oil cylinder (4) is connected to the second end of the cross beam connecting ear (31), and the first open-and-close mold oil cylinder (4) and the second open-and-close mold oil cylinder (4) are configured to drive the cross beam (3) to vertically slide along the first stand column (101) and the second stand column (102); and
two pull rod assemblies (5), wherein each of the two pull rod assemblies (5) is connected between a respective cross beam connecting ear (31) and a respective base connecting ear (21), and the two pull rod assemblies (5) are configured to lock the cross beam (3) and the base (2) in a case where the cross beam (3) and the base (2) are mold-closed.

2. The pull rod type vulcanizing machine of claim 1, wherein the first stand column (101) and the second stand column (102) each are provided with at least two sliding side surfaces, the at least two sliding side surfaces comprises a first sliding side surface and a second sliding side surface, the at least one manipulator (6) is connected to at least one of a first sliding side surface of the first stand column (101) and a first sliding side surface of the second stand column (102), and the cross beam (3) is connected to a second sliding side surface of the first stand column (101) and a second sliding side surface of the second stand column (102).

3. The pull rod type vulcanizing machine of claim 1, wherein the first stand column (101) and the second stand column (102) are symmetrically arranged with a center point of the cross beam (3) and a center point of the base (2) as a center, the first stand column (101) is located on a first side of the cross beam (3), and the second stand column (102) is located on a second side of the cross beam (3); a line connecting center points of the first stand column (101) and the second stand column (102) is at a preset angle with a horizontal line passing through the center point of the cross beam (3) or the center point of the base (2).

4. The pull rod type vulcanizing machine of claim 1, wherein the pull rod assembly (5) comprises a pressurized oil cylinder (52) connected to the base (2), a pull rod (51) connected to a cylinder rod of the pressurized oil cylinder (52), and a mold clamping device (53) connected to the cross beam (3), and the pull rod (51) is configured to pass through the mold clamping device (53) and be locked with and in cooperation with the mold clamping device (53) in the case where the cross beam (3) and the base (2) are mold-closed.

5. The pull rod type vulcanizing machine of claim 4, wherein the mold clamping device (53) comprises a mold clamping part configured to be locked with and in cooperation with the pull rod (51), the mold clamping part is provided with a mold clamping hole, and the pull rod (51) is configured to pass through the mold clamping hole and be locked with the mold clamping hole.

6. The pull rod type vulcanizing machine of claim 5, further comprising an air cylinder (537), wherein the mold clamping part comprises at least two clamping plates (536), the at least two clamping plates (536) are arranged in a ring shape and are joined together to form the mold clamping hole, the at least two clamping plates (536) are movable along a radial direction of the mold clamping hole, and the air cylinder (537) is connected to at least one of the at least two clamping plates (536).

7. The pull rod type vulcanizing machine of claim 6, wherein the mold clamping device (53) further comprises an adjustment part, the adjustment part is connected between the mold clamping part and the cross beam (3), and the adjustment part is configured to adjust a molding distance between the cross beam (3) and the base (2) by adjusting a distance between the cross beam (3) and the mold clamping part.

8. The pull rod type vulcanizing machine of claim 7, further comprising a rotation driving structure, wherein the adjustment part comprises a stud (531) provided with a stud hole (5311) and a nut (532) sleeved on the stud (531), the nut (532) is connected to the cross beam (3), a first end of the stud (531) is connected to the mold clamping part, a second end of the stud (531) is suspended after passing through the nut (532), a center of the stud hole (5311) is aligned with a center of the mold clamping hole, and the nut (532) is connected to the rotation driving structure.

## Patentansprüche

1. Vulkanisiermaschine vom Zugstangentyp, umfassend:
eine erste Standsäule (101) und eine zweite Standsäule (102), wobei die erste Standsäule (101) und die zweite Standsäule (102) mit einem Abstand angeordnet sind;
einen Sockel (2), wobei ein erstes Ende des Sockels (2) mit der ersten Standsäule (101) verbunden ist und ein zweites Ende des Sockels (2) mit der zweiten Standsäule (102) verbunden ist, und das erste Ende und das zweite Ende des Sockels (2) jeweils mit einer Sockelanschlussöse (21) bereitgestellt sind;
einen Querträger (3), der über dem Sockel (2) gelegen ist, wobei am ersten Ende und am zweiten Ende des Querträgers (3) jeweils zwei Querträger-Verbindungsösen (31) bereitgestellt sind, das erste Ende des Querträgers (3) durch eine der zwei Querträger-Verbindungsösen (31) verschiebbar mit der ersten Standsäule (101) verbunden ist und ein zweites Ende des Querträgers (3) durch eine andere der zwei Querträger-Verbindungsösen (31) verschiebbar mit der zweiten Standsäule (102) verbunden ist;
mindestens einen Manipulator (6), wobei der mindestens eine Manipulator (6) mit mindestens einer der ersten Standsäulen (101) und der zweiten Standsäulen (102) verbunden ist und vertikal entlang der mindestens einen der ersten Standsäulen (101) und der zweiten Standsäulen (102) verschiebbar ist,
wobei der mindestens eine Manipulator (6) und der Querträger (3) in mindestens einer der folgenden zwei Formen angeordnet sind:
der mindestens eine Manipulator (6) und der Querträger (3) sind jeweils mit unterschiedlichen Seiten der ersten Ständersäule (101) verbunden; und
der mindestens eine Manipulator (6) und der Querträger (3) sind jeweils mit unterschiedlichen Seiten der zweiten Stativsäule (102) verbunden;
zwei Formölzylinder (4) zum Öffnen und Schließen, die einen ersten Formölzylinder (4) zum Öffnen und Schließen und einen zweiten Formölzylinder (4) zum Öffnen und Schließen umfassen, wobei eine Zylinderstange des ersten Formölzylinders (4) zum Öffnen und Schließen mit dem ersten Ende der Querträger-Verbindungsöse (31) verbunden ist und eine Zylinderstange des zweiten Formölzylinders (4) zum Öffnen und Schließen mit dem zweiten Ende der Querträger-Verbindungsöse (31) verbunden ist, und der erste Formölzylinder (4) zum Öffnen und Schließen und der zweite Formölzylinder (4) zum Öffnen und Schließen so konfiguriert sind, dass sie den Querträger (3) antreiben, sodass er vertikal entlang der ersten Ständersäule (101) und der zweiten Ständersäule (102) gleitet; und
zwei Zugstangenanordnungen (5), wobei jede der zwei Zugstangenanordnungen (5) zwischen einer jeweiligen Querträger-Verbindungsöse (31) und einer jeweiligen Sockel-Verbindungsöse (21) verbunden ist und die zwei Zugstangenanordnungen (5) so konfiguriert sind, dass sie den Querträger (3) und den Sockel (2) verriegeln, wenn der Querträger (3) und der Sockel (2) formgeschlossen sind.

2. Vulkanisiermaschine vom Zugstangentyp nach Anspruch 1, wobei die erste Standsäule (101) und die zweite Standsäule (102) jeweils mit mindestens zwei Gleitseitenflächen bereitgestellt sind, die mindestens zwei Gleitseitenflächen eine erste Gleitseitenfläche und eine zweite Gleitseitenfläche umfassen, der mindestens eine Manipulator (6) mit mindestens einer ersten Gleitseitenfläche der ersten Standsäule (101) und einer ersten Gleitseitenfläche der zweiten Standsäule (102) verbunden ist und der Querträger (3) mit einer zweiten Gleitseitenfläche der ersten Standsäule (101) und einer zweiten Gleitseitenfläche der zweiten Standsäule (102) verbunden ist.

3. Vulkanisiermaschine vom Zugstangentyp nach Anspruch 1, wobei die erste Standsäule (101) und die zweite Standsäule (102) symmetrisch angeordnet sind, mit einem Mittelpunkt des Querträgers (3) und einem Mittelpunkt des Sockels (2) als Mitte, die erste Standsäule (101) auf einer ersten Seite des Querträgers (3) gelegen ist und die zweite Standsäule (102) auf einer zweiten Seite des Querträgers (3) gelegen ist; eine Linie, die die Mittelpunkte der ersten Standsäule (101) und der zweiten Standsäule (102) verbindet, in einem voreingestellten Winkel zu einer horizontalen Linie steht, die durch den Mittelpunkt des Querträgers (3) oder den Mittelpunkt des Sockels (2) durchgeht.

4. Vulkanisiermaschine vom Zugstangentyp nach Anspruch 1, wobei die Zugstangenanordnung (5) einen mit dem Sockel (2) verbundenen Druckölzylinder (52), eine mit einer Zylinderstange des Druckölzylinders (52) verbundene Zugstange (51) und eine mit dem Querträger (3) verbundene Formklemmvorrichtung (53) umfasst und die Zugstange (51) so konfiguriert ist, dass sie durch die Formklemmvorrichtung (53) durchgeht und mit der Formklemmvorrichtung (53) verriegelt ist und mit dieser zusammenwirkt, wenn der Querträger (3) und der Sockel (2) formgeschlossen sind.

5. Vulkanisiermaschine vom Zugstangentyp nach Anspruch 4, wobei die Formklemmvorrichtung (53) ein Formklemmteil umfasst, das so konfiguriert ist, dass es mit der Zugstange (51) verriegelt wird und mit dieser zusammenwirkt, das Formklemmteil mit einer Formklemmöffnung bereitgestellt ist und die Zugstange (51) so konfiguriert ist, dass sie durch die Formklemmöffnung durchgeht und mit der Formklemmöffnung verriegelt wird.

6. Vulkanisiermaschine vom Zugstangentyp nach Anspruch 5, die weiter einen Luftzylinder (537) umfasst, wobei das Formklemmteil mindestens zwei Klemmplatten (536) umfasst, die mindestens zwei Klemmplatten (536) ringförmig angeordnet sind und miteinander verbunden sind, um die Formklemmöffnung zu bilden, die mindestens zwei Klemmplatten (536) entlang einer radialen Richtung der Formklemmöffnung beweglich sind und der Luftzylinder (537) mit mindestens einer der mindestens zwei Klemmplatten (536) verbunden ist.

7. Vulkanisiermaschine vom Zugstangentyp nach Anspruch 6, wobei die Formklemmvorrichtung (53) weiter ein Einstellteil umfasst, das Einstellteil zwischen dem Formklemmteil und dem Querträger (3) verbunden ist und das Einstellteil so konfiguriert ist, dass es einen Formabstand zwischen dem Querträger (3) und dem Sockel (2) durch Einstellen eines Abstands zwischen dem Querträger (3) und dem Formklemmteil einstellt.

8. Vulkanisiermaschine vom Zugstangentyp nach Anspruch 7, die weiter eine Drehantriebsstruktur umfasst, wobei das Einstellteil einen Bolzen (531) umfasst, der mit einem Bolzenloch (5311) und eine auf den Bolzen (531) aufgesteckte Mutter (532) bereitgestellt ist, die Mutter (532) mit dem Querträger (3) verbunden ist, ein erstes Ende des Bolzens (531) mit dem Formklemmteil verbunden ist, ein zweites Ende des Bolzens (531) nach Durchgehen durch die Mutter (532) aufgehängt ist, ein Mittel des Bolzenlochs (5311) mit einem Mitte des Formklemmlochs ausgerichtet ist und die Mutter (532) mit der Drehantriebsstruktur verbunden ist.

## Revendications

1. Machine de vulcanisation de type à tige de traction, comprenant :
une première colonne de support (101) et une seconde colonne de support (102), dans laquelle la première colonne de support (101) et la seconde colonne de support (102) sont agencées à un intervalle ;
une base (2), dans laquelle une première extrémité de la base (2) est reliée à la première colonne de support (101), et une seconde extrémité de la base (2) est reliée à la seconde colonne de support (102), et la première extrémité et la seconde extrémité de la base (2) sont respectivement munies d'une oreille de liaison de base (21) ;
une traverse (3) située au-dessus de la base (2), dans laquelle deux oreilles de liaison de traverse (31) sont disposées à la première extrémité et à la seconde extrémité de la traverse (3), respectivement, la première extrémité de la traverse (3) est reliée de manière coulissante à la première colonne de support (101) par l'une des deux oreilles de liaison de traverse (31), et une seconde extrémité de la traverse (3) est reliée de manière coulissante à la seconde colonne de support (102) par l'autre des deux oreilles de liaison de traverse (31) ;
au moins un manipulateur (6), dans laquelle le au moins un manipulateur (6) est relié à au moins l'une de la première colonne de support (101) et de la seconde colonne de support (102), et pouvant coulisser verticalement le long de la au moins une de la première colonne de support (101) et de la seconde colonne de support (102),
dans laquelle le au moins un manipulateur (6) et la traverse (3) sont agencés selon au moins l'une des deux formes suivantes :
le au moins un manipulateur (6) et la traverse (3) sont reliés à des côtés différents de la première colonne de support (101), respectivement ; et
le au moins un manipulateur (6) et la traverse (3) sont reliés à des côtés différents de la seconde colonne de support (102), respectivement ;
deux vérins hydrauliques d'ouverture et de fermeture de moule (4) comprenant un premier vérin hydraulique d'ouverture et de fermeture de moule (4) et un second vérin hydraulique d'ouverture et de fermeture de moule (4), une tige de vérin du premier vérin hydraulique d'ouverture et de fermeture de moule (4) est reliée à la première extrémité de l'oreille de liaison de traverse (31), et une tige de vérin du second vérin hydraulique d'ouverture et de fermeture de moule (4) est reliée à la seconde extrémité de l'oreille de liaison de traverse (31), et le premier vérin hydraulique d'ouverture et de fermeture de moule (4) et le second vérin hydraulique d'ouverture et de fermeture de moule (4) sont configurés pour amener la traverse (3) à coulisser verticalement le long de la première colonne de support (101) et de la seconde colonne de support (102) ; et
deux ensembles tiges de traction (5), dans laquelle chacun des deux ensembles tiges de traction (5) est relié entre une oreille de liaison de traverse respective (31) et à une oreille de liaison de base respective (21), et les deux ensembles tiges de traction (5) sont configurés pour verrouiller la traverse (3) et la base (2) dans un cas où la traverse (3) et la base (2) sont à l'état moule fermé.

2. Machine de vulcanisation de type à tige de traction selon la revendication 1, dans laquelle la première colonne de support (101) et la seconde colonne de support (102) sont chacune munies d'au moins deux surfaces latérales coulissantes, les au moins deux surfaces latérales coulissantes comprennent une première surface latérale coulissante et une seconde surface latérale coulissante, le au moins un manipulateur (6) est relié à au moins l'une d'une première surface latérale coulissante de la première colonne de support (101) et d'une première surface latérale coulissante de la seconde colonne de support (102), et la traverse (3) est reliée à une seconde surface latérale coulissante de la première colonne de support (101) et à une seconde surface latérale coulissante de la seconde colonne de support (102).

3. Machine de vulcanisation de type à tige de traction selon la revendication 1, dans laquelle la première colonne de support (101) et la seconde colonne de support (102) sont agencées symétriquement avec un point central de la traverse (3) et un point central de la base (2) comme centre, la première colonne de support (101) est située sur un premier côté de la traverse (3), et la seconde colonne de support (102) est située sur un second côté de la traverse (3) ; une ligne reliant les points centraux de la première colonne de support (101) et de la seconde colonne de support (102) est à un angle prédéfini avec une ligne horizontale passant à travers le point central de la traverse (3) ou le point central de la base (2).

4. Machine de vulcanisation de type à tige de traction selon la revendication 1, dans laquelle l'ensemble tige de traction (5) comprend un vérin hydraulique sous pression (52) relié à la base (2), une tige de traction (51) reliée à une tige de vérin du vérin hydraulique sous pression (52), et un dispositif de serrage de moule (53) relié à la traverse (3), et la tige de traction (51) est configurée pour passer à travers le dispositif de serrage de moule (53) et être verrouillée avec et en coopération avec le dispositif de serrage de moule (53) dans le cas où la traverse (3) et la base (2) sont à l'état moule fermé.

5. Machine de vulcanisation de type à tige de traction selon la revendication 4, dans laquelle le dispositif de serrage de moule (53) comprend une partie de serrage de moule configurée pour être verrouillée avec et en coopération avec la tige de traction (51), la partie de serrage de moule est munie d'un trou de serrage de moule, et la tige de traction (51) est configurée pour passer à travers le trou de serrage de moule et être verrouillée avec le trou de serrage de moule.

6. Machine de vulcanisation de type à tige de traction selon la revendication 5, comprenant en outre un vérin pneumatique (537), dans laquelle la partie de serrage de moule comprend au moins deux plaques de serrage (536), les au moins deux plaques de serrage (536) sont agencées en forme d'anneau et assemblées pour former le trou de serrage de moule, les au moins deux plaques de serrage (536) sont mobiles le long d'une direction radiale du trou de serrage de moule, et le vérin pneumatique (537) est relié à au moins l'une des au moins deux plaques de serrage (536).

7. Machine de vulcanisation de type à tige de traction selon la revendication 6, dans laquelle le dispositif de serrage de moule (53) comprend en outre une partie d'ajustement, la partie d'ajustement est montée entre la partie de serrage de moule et la traverse (3), et la partie d'ajustement est configurée pour ajuster une distance de moulage entre la traverse (3) et la base (2) en ajustant une distance entre la traverse (3) et la partie de serrage de moule.

8. Machine de vulcanisation de type à tige de traction selon la revendication 7, comprenant en outre une structure de commande de rotation, dans laquelle la partie d'ajustement comprend un goujon (531) muni d'un trou de goujon (5311) et un écrou (532) manchonné sur le goujon (531), l'écrou (532) est relié à la traverse (3), une première extrémité du goujon (531) est reliée à la partie de serrage de moule, une seconde extrémité du goujon (531) est suspendue après être passé à travers l'écrou (532), un centre du trou de goujon (5311) est aligné avec un centre du trou de serrage de moule, et l'écrou (532) est relié à la structure de commande de rotation.
